(19) Europäisches Patentamt

European Patent Office

Office européen des brevets

(11) **EP 1 514 589 A1**

(12) **EUROPÄISCHE PATENTANMELDUNG**

(43) Veröffentlichungstag:
**16.03.2005 Patentblatt 2005/11**

(51) Int Cl.⁷: **B01D 53/62**, B01D 53/56,
B01D 53/86, B01D 53/94,
C01C 1/02, C01C 1/08

(21) Anmeldenummer: 03405587.1

(22) Anmeldetag: **12.08.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(71) Anmelder: **Hochschule Rapperswil,
Institut für angewandte Umwelttechnik
8640 Rapperswil (CH)**

(72) Erfinder: **Bunge, Rainer, Prof. Dr.
8057 Zürich (DE)**

Bemerkungen:
Geänderte Patentansprüche gemäss Regel 86 (2)
EPÜ.

(54) **Verfahren und Mittel zur Entstickung von Abgasen**

(57) Zur Entstickung von Abgasen durch katalytische Reduktion, insbesondere zur Entstickung von Dieselabgasen, wird Ammoniakgas in das Abgas eingeleitet. Das Ammoniakgas wird durch thermische Spaltung von beispielsweise Harnstoff in Ammoniak und Kohlendioxid erzeugt, wobei die Spaltung in Gegenwart eines Kohlendioxid-bindenden Stoffes durchgeführt wird. Dadurch wird dem AbgasSystem im Wesentlichen Kohlendioxid-freies Ammoniak zugeführt, wodurch unerwünschte Ablagerungen in den Leitungen zwischen einem Reaktor für die Spaltung und dem Abgassystem vermieden werden. Dies macht die Entstickung robust und wenig wartungsintensiv. Das bevorzugte Mittel, das für die Entstickung eingesetzt wird, ist eine trockene Mischung von Harnstoff und Bariumhydroxid, das beispielsweise in austauschbaren Patronen zum Einsatz kommt.

Printed by Jouve, 75001 PARIS (FR)

# EP 1 514 589 A1

**Beschreibung**

Die Erfindung betrifft ein Verfahren und ein Mittel nach den Oberbegriffen der entsprechenden, unabhängigen Patentansprüche. Verfahren und Mittel dienen zur Entstickung von Abgasen mittels Ammoniak, wobei Verfahren und Mittel insbesondere geeignet sind, Stickoxide in Abgasen von Dieselmotoren durch selektive katalytische Reduktion (SCR) zu entfernen.

Ein grosses Problem in der Luftreinhaltung ist die Bekämpfung von Stickoxiden ($NO_x$). Wichtige Quellen für Stickoxide sind Dieselmotoren. Eine bei Dieselmotoren bekannte Technologie zur Bekämpfung von Stickoxiden ist das SCR-Verfahren, bei dem die Stickoxide im Abgas nach Eindüsung von Ammoniak in einer selektiven katalytischen Reduktion zerstört werden. Problematisch ist bei diesem Verfahren, dass Ammoniak giftig ist und bei seiner Handhabung und Lagerung insbesondere in reinem Zustand strenge Sicherheitsvorkehrungen eingehalten werden müssen. Aus diesem Grunde wird bei der Entstickung der Abgase von grossen (stationären) Dieselmotoren heute im Allgemeinen (ungiftiger) Harnstoff als Reduktionsmittel verwendet. Der Harnstoff wird in den Abgasstrom eingebracht und zersetzt sich dort thermisch zu Ammoniakgas und Kohlendioxid nach folgender Formel:

$$CO(NH_2)_2 + H_2O \rightarrow 2\,NH_3 + CO_2 \qquad\qquad (G1.\ 1)$$

Die Kinetik dieser thermischen Harnstoffspaltung im Abgasstrang ist jedoch so langsam, dass das Verfahren bei kleinen Dieselmotoren, insbesondere bei Dieselfahrzeugen, nicht anwendbar ist.

Für die Entstickung auf Dieselfahrzeugen muss der Harnstoff daher zunächst einmal ausserhalb des Abgasstranges in Ammoniak umgewandelt werden.

Diese Umwandlung kann z.B. thermisch bei Temperaturen >200°C bewirkt werden. Die thermische Spaltung ist in der amerikanischen Literatur unter dem Begriff "urea to ammonia" Technologie Stand der Technik zur Bereitstellung von Ammoniak für Grossfeuerungsanlagen (http://www.de-nox.com/OTAS.htm; http://www.aep.com/environmental/emissioncontrol/cleanenergy/UreaFacts.htm) bekannt.

Eine weitere Möglichkeit ist die Spaltung von Harnstoff bei mittleren bis tiefen Temperaturen nach Zugabe von Katalysatoren oder Enzymen. In der Publikation DE 44 25 420 (Daimler Benz) wird beispielsweise vorgeschlagen, das Fahrzeug mit einer wässrigen Harnstofflösung zu betanken, dann im Fahrzeug durch eine kontinuierliche, enzymatische Spaltung aus dem Harnstoff Ammoniak in Gasform herzustellen und dieses Ammoniak in den Abgasstrom bzw. den SCR-Katalysator einzubringen. Ein Nachteil dieses Verfahrens besteht in der langsamen Kinetik der Harnstoffspaltung bei Umgebungstemperatur. Auf diese Weise ist eine geregelte Dosierung der Ammoniakzugabe entsprechend den Bedürfnissen von Dieselmotoren mit hochdynamischen Lastprofilen, wie bei dieselbetriebenen Fahrzeugen typisch, nicht möglich.

Alternativ können dem Harnstoff verwandte chemische Stoffe zur Ammoniakproduktion verwendet werden. So wird in DE 197 20 209 C1 vorgeschlagen, Ammoniumcarbamat zu verwenden. Ammoniumcarbamat lässt sich bereits bei 60°C in Ammoniak und Kohlendioxid spalten. Ein weiteres solches Verfahren auf Ammoniumcarbamat Basis ist in der "Motortechnischen Zeitschrift" MTZ 6/2003 (64) veröffentlicht. Hier wird trockenes Ammoniumcarbamat in einem heizbaren Reaktor vorgelegt und thermisch zersetzt.

Allen bekannten Verfahren, in denen das für die Entstickung verwendete Ammoniak im wesentlichen "online" durch Spaltung eines geeigneten Stoffes erzeugt und dem zu entstickenden Abgas zugeführt wird, ist gemeinsam, dass durch die Spaltung ein Gasgemisch aus Ammoniak und Kohlendioxid entsteht, welches dann in das Abgas eingeleitet wird. Problematisch ist hierbei, dass sich Ammoniak und Kohlendioxid zu Ammoniumcarbamat und schwerlöslichen Ammoniumcarbonaten rekombinieren können. Ueberdies werden je nach Verfahren zahlreiche weitere unerwünschte Zwischen- und Nebenprodukte erzeugt (http://www.de-nox.com/OTAS.htm). In der Praxis verursachen diese Produkte erhebliche Probleme, da sie sich in Zuleitungen, durch die das Gasgemisch vom Reaktor zum Abgasstrang strömt, als Anbackungen ablagern. Diese Leitungen sowie die darin befindlichen Armaturen müssen zur Vermeidung von solchen Ablagerungen ständig beheizt werden.

Die Erfindung stellt sich nun die Aufgabe, ein Verfahren und ein Mittel zur Abgas-Entstickung mittels Ammoniak zu schaffen, mit denen zwar das Ammoniak, wie in den genannten Verfahren, durch "on-demand" Spaltung eines geeigneten Stoffes hergestellt wird und dadurch die Schwierigkeiten der Handhabung von grösseren Mengen von Ammoniak umgangen werden können, mit denen aber auch die oben geschilderten Schwierigkeiten der Zuleitung des durch die Spaltung erzeugten Ammoniakgases vermieden werden sollen. Trotzdem soll das Verfahren und das in dem Verfahren einzusetzende Mittel nicht wesentlich aufwendiger sein als die genannten bekannten Verfahren und Mittel.

Diese Aufgabe wird gelöst durch das Verfahren und das Mittel zur Abgas-Entstickung, wie sie in den Patentansprüchen definiert sind.

Nach dem erfindungsgemässen Verfahren wird wie in den oben genannten, bekannten Verfahren ein dazu geeigneter Stoff (Harnstoff, Ammoniumcarbamat, Isocyansäure, Biuret etc.) einer Ammoniak und Kohlendioxid liefernden Spaltung unterzogen (vorteilhafterweise durch thermische Zersetzung), wobei aber dem zu spaltenden Stoff ein Mittel zum Binden des durch die Spaltung entstehenden Kohlendioxids (z.B. Bariumhydroxid oder ein anderes Erdalkalisalz oder allgemein ein Stoff, der mit Kohlendioxid ein schwerlösliches Carbonat bildet) beigegeben wird, derart, dass das aus dem Spaltungsreaktor für die Entstickung entnehmbare Ammoniak frei von Kohlendioxid ist und ohne die genannten Schwierigkeiten in den Abgasstrom eingeleitet werden kann.

Gemäss dem erfindungsgemässen Verfahren wird also ein Gemisch aus wenigstens zwei Stoffen in einem Reaktor vorgelegt, nämlich ein erster Stoff, der bei seiner Spaltung Ammoniak und Kohlendioxid freisetzt, und ein zweiter Stoff, der das entstehende Kohlendioxid bindet. Dieses Gemisch wird in geeigneter Weise aktiviert und setzt dabei reines Ammoniakgas frei.

Das Gemisch ist vorteilhafterweise derart zusammengesetzt, dass es fest ist und bei Temperaturen, wie sie in einem Fahrzeug vorkommen, vollständig stabil und dass es nur bei Wärmezufuhr (bei Temperaturen von über 50°C) Ammoniak produziert. Ein bevorzugtes solches Gemisch besteht aus Harnstoff und Bariumhydroxid.

Der Vorteil des erfindungsgemässen Verfahrens besteht insbesondere darin, dass das dem Abgas zugeführte Entstickungsmittel (Kohlendioxid-freies Ammoniakgas) schnell und nach Bedarf produziert werden kann, ohne dass dabei ein Gasgemisch entsteht, das in den Zuleitungen zum Abgasstrang Anbackungen bildet.

Das Verfahren gemäss Erfindung wird mittels der in den folgenden Figuren beschriebenen Vorrichtungen ausgeführt. Dabei zeigen:

Figur 1            ein Beispiel eines Reaktors, in dem das erfindungsgemässe Verfahren durchführbar ist;

Figuren 2 und 3    zwei beispielhafte Ausführungsformen von Abgas-Entstickungsanlagen, die zur Durchführung des erfindungsgemässen Verfahrens einsetzbar sind.

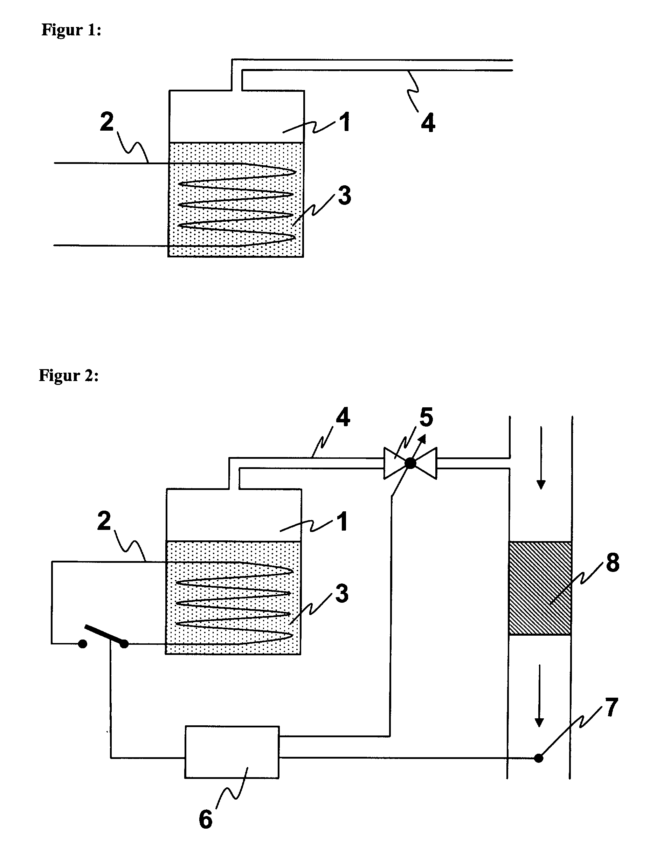

**Figur 1** zeigt einen Reaktor (1), in dem sich ein trockenes Chemikaliengemisch (3) befindet, das mittels der Heizung (2) erwärmt wird. Der Reaktor hat eine Rohrleitung (4) zum Abführen des produzierten Ammoniakgases. Das Chemikaliengemisch besteht aus Harnstoff und Bariumhydroxid, das bei Erwärmung reines Ammoniakgas freisetzt.

**Figur 2** zeigt einen Reaktor (1) mit regelbarer Heizung (2). Die Heizung (2) wird durch eine elektronische Datenverarbeitung (6) angesteuert, welche wiederum an eine Messsonde (7) angeschlossen ist. In der Leitung für das Ammoniakgas (4) ist ein über die elektronische Datenverarbeitung (6) regelbares Ventil (5) eingebaut. Im Abgasstrom befindet sich ein SCR-Katalysator (8). Wird an der Sonde (7) ein Ueberschuss an Stickoxiden im Abgas gemessen, dann wird über die elektronische Datenverarbeitung (6) zunächst das Ventil (5) geöffnet und das unter Ueberdruck anstehende Ammoniakgas in den Abgasstrom eingeleitet. Dann wird die Heizung (2) aktiviert, das Chemikaliengemisch (3) zersetzt und der Ammoniaküberdruck wieder hergestellt.

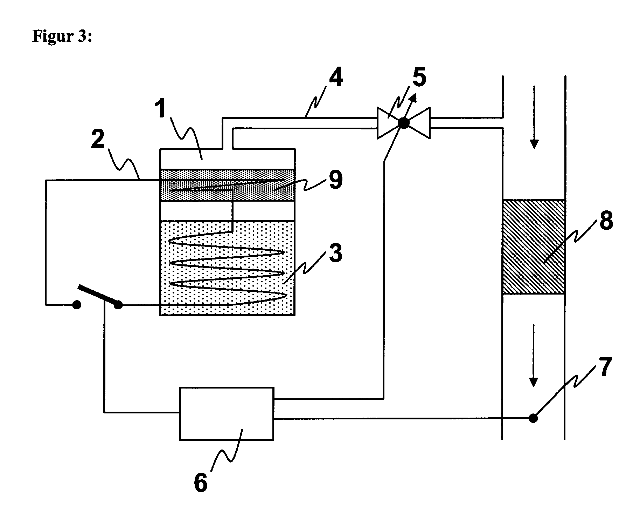

**Figur 3** zeigt eine weitere bevorzugte Ausführungsform des erfindungsgemässen Verfahrens. Hier wird das produzierte Ammoniakgas in einem geeigneten Medium (9) zwischengespeichert. Hierfür kommen aktive Speichermedien, z.B. eine Aktivkohleschüttung, in Frage. Das Medium (9) ist so eingerichtet, dass es bei Beheizung Ammoniak freisetzt. In einer Ausführungsform ist das Medium überdies so imprägniert, dass allfällige Restmengen von Kohlendioxid thermisch irreversibel darauf zurückgehalten werden, z.B. durch Bildung schwerlöslicher Karbonate. Mit dieser Vorrichtung kann auch bei hohem spontanem Bedarf das benötigte Ammoniakgas bereitgestellt werden, ohne dass die vergleichsweise langsame Kinetik der Harnstoffspaltung für die Ammoniakabgabe in den Abgasstrom kritisch wird.

Bevorzugte Ausführungsformen des erfindungsgemässen Verfahrens betreffen die Einbindung in geregelte Systeme (*closed loop control*) oder Motor-Kennfeld gesteuerte Systeme (*open loop control*).

Als chemischer Stoff zur Freisetzung von Ammoniak und Kohlendioxid kommt bevorzugt Harnstoff in Frage. In diesem Falle erfordert die chemische Reaktion gemäss Gl. 1 die Zugabe von Wasser. Dieses wird in einer bevorzugten Ausführungsform des erfindungsgemässen Verfahrens durch Abspaltung aus einer chemischen Verbindung bereitgestellt. Wie unsere Versuche gezeigt haben, eignet sich insbesondere Bariumhydroxid (Ba(OH)$_2$ x H$_2$O) ausserordentlich gut für die Hamstoffspaltung, da Bariumhydroxid im Gemisch mit Harnstoff bei Erwärmung über den Schmelzpunkt von Bariumhydroxid (78°C) gleichzeitig Wasser abspaltet und Kohlendioxid bindet. Vereinfacht dargestellt geschieht diese Reaktion nach folgender Formel:

$$CO(NH_2)_2 + Ba(OH)_2 \rightarrow 2\ NH_3 + BaCO_2 \hspace{3cm} (G1.2)$$

**Beispiel 1:**

In einem Reaktor (1) gemäss Fig. 1 wurde ein gemäss Gl. 2 stöchiometrisches Gemisch (3) aus Harnstoff (als trockenes Pulver) und Ba(OH)$_2$ x H$_2$O (als trockenes Pulver) bereitgestellt. Das Feststoffgemisch (3) wurde bei Raumtemperatur gelagert.

Versuchsresultat: Es ist keine Ammoniakbildung festzustellen. Das Feststoffgemisch bleibt in seiner Form unverändert.

**Beispiel 2:**

Gemäss Beispiel 1 wurde der Reaktor (1) mit denselben Vorlagen beschickt. Mittels einer Heizung wurde das Feststoffgemisch (3) auf 80°C erhitzt. Durch eine Rohrleitung (4) wurde das entweichende Ammoniakgas in eine Waschflasche geleitet.

Versuchsresultat: Nach Erhitzung des Feststoffgemischs (3) entstand Ammoniakgas, welches in der Waschflasche aufgefangen wurde. Durch die Zugabe einiger Tropfen einer Ba(OH)$_2$-Lösung wurde die Abwesenheit von CO$_2$ verifiziert. Dies ist insofern überraschend, als bei der vorgelegten stöchiometrischen Mischung ein Ueberschuss an CO$_2$ zu erwarten gewesen wäre.

Obwohl Harnstoff der in der Ausübung unserer Erfindung bevorzugte Lieferant für Ammoniak ist, lassen sich auch verwandte chemische Stoffe einsetzen, die Ammoniak und Kohlendioxid freisetzen, so z.B. Ammoniumcarbamat, Biuret oder Isocyansäure.

In der praktischen Anwendung wird das trockene Gemisch (z.B. als Granulatfüllung) in Patronen an Tankstellen oder in Werkhöfen bereitgestellt. Bei Bedarf werden diese Patronen vom Fahrer oder vom Mechaniker ausgewechselt. Eine Patrone von beispielsweise 10 Liter Inhalt reicht auf einem Bus für etwa 750 km Reichweite. Der Inhalt der aufgebrauchten Patronen wird rezykliert, indem das gebildete Bariumcarbonat erneut zu Bariumoxid gebrannt und dann zu Bariumhydroxid abgelöscht wird.

Das erfindungsgemässe System zur on-board Harnstoffspaltung besitzt folgende Vorteile:

- Einfache Technologie (wenige bewegliche Teile etc.)
- Robuster Prozess (keine unerwünschten Ablagerungen, Frostsicherheit)
- Geringe Kosten
- Hohe Sicherheit: Ammoniakbereitstellung "on demand"
- Einfache Handhabung (auswechseln der Patronen)

Keines der nach dem derzeitigen Stand der Technik verfügbaren Systeme zur Bereitstellung von Ammoniak aus Harnstoff zum Einsatz auf Fahrzeugen erfüllt diese Anforderungen auch nur annährend.

**Patentansprüche**

1. Verfahren zur Entstickung von Abgasen mittels Ammoniakgas, wobei das Ammoniakgas durch Spaltung eines Ammoniak und Kohlendioxid freisetzenden ersten Stoffes erzeugt und aus der Spaltung in den Abgasstrom geleitet wird, **dadurch gekennzeichnet, dass** die Spaltung des ersten Stoffs in Gegenwart eines zweiten, Kohledioxid bindenden Stoffs durchgeführt wird, derart, dass das in den Abgasstrom geleitete Ammoniakgas im wesentlichen frei von Kohledioxid ist.

2. Verfahren nach Anspruch 1, **dadurch gekennzeichnet, dass** die Spaltung des ersten Stoffs eine thermische Spaltung ist und bei Temperaturen oberhalb 50°C stattfindet.

3. Verfahren nach einem der Ansprüche 1 oder 2, **dadurch gekennzeichnet, dass** der erste chemische Stoff Harnstoff oder Ammoniumcarbamat oder Biuret oder Isocyansäure ist.

4. Verfahren nach einem der Ansprüche 1 bis 3, **dadurch gekennzeichnet, dass** der zweite Stoff bei Kontakt mit Kohlendioxid schwerlösliche Karbonate bildet.

5. Verfahren nach einem der Ansprüche 1 bis 4, **dadurch gekennzeichnet, dass** für den Spaltungsprozess notwendiges Wasser dem Spaltungsprozess in Form eines unter den Spaltungsbedingungen Wasser abspaltenden, festen, dritten Stoffes zugegeben wird.

6. Verfahren nach einem der Ansprüche 1 bis 4, **dadurch gekennzeichnet, dass** für den Spaltungsprozess notwendiges Wasser in chemisch gebundener Form in dem zweiten Stoff vorliegt, beispielsweise als Kristallwasser oder als aus einem Hydroxid durch Reaktion mit Kohlendioxid abspaltbares Wasser.

7. Verfahren nach Anspruch 6, **dadurch gekennzeichnet, dass** der erste Stoff Harnstoff ist und dass der zweite Stoff ein Bariumhydroxid ist.

8. Mittel zur Entstickung von Abgasen mittels Ammoniakgas, welches Mittel einen ersten Stoff aufweist, der in Ammoniak und Kohledioxid spaltbar ist, **gekennzeichnet dadurch, dass** das Mittel einen zweiten, Kohlendioxidbindenden Stoff aufweist.

9. Mittel nach Anspruch 8, **dadurch gekennzeichnet, dass** der erste Stoff Harnstoff, Ammoniumcarbamat, Biuret oder Isocyansäure ist und in dem Mittel zwischen 5% und 60% der Gesamtmasse darstellt.

10. Mittel nach einem der Ansprüche 8 oder 9, **dadurch gekennzeichnet, dass** der erste Stoff Harnstoff ist und dass der zweite Stoff ein Bariumhydroxid ist.

11. Mittel nach einem der Ansprüche 8 bis 10, **gekennzeichnet dadurch, dass** das Mittel als zweiten Stoff einen relativen Massenanteil an Bariumhydroxid, gerechnet als wasserfreies $Ba(OH)_2$, zwischen 40% und 95% enthält, vorzugsweise zwischen 65% und 90%.

**Geänderte Patentansprüche gemäss Regel 86(2) EPÜ.**

1. Verfahren zur Entstickung von Abgasen mittels Ammoniakgas, wobei das Ammoniakgas durch Spaltung eines Ammoniak und Kohlendioxid freisetzenden ersten Stoffes erzeugt und aus der Spaltung in den Abgasstrom geleitet wird, **dadurch gekennzeichnet, dass** die Spaltung des ersten Stoffs in Gegenwart einer mindestens stöchiometrischen Menge eines zweiten, Kohledioxid bindenden Stoffs durchgeführt wird, derart, dass das in den Abgasstrom geleitete Ammoniakgas im wesentlichen frei von Kohledioxid ist.

2. Verfahren nach Anspruch 1, **dadurch gekennzeichnet, dass** die Spaltung des ersten Stoffs eine thermische Spaltung ist und bei Temperaturen oberhalb 50°C stattfindet.

3. Verfahren nach einem der Ansprüche 1 oder 2, **dadurch gekennzeichnet, dass** der erste chemische Stoff Harnstoff oder Ammoniumcarbamat oder Biuret oder Isocyansäure ist.

4. Verfahren nach einem der Ansprüche 1 bis 3, **dadurch gekennzeichnet, dass** der zweite Stoff bei Kontakt mit Kohlendioxid schwerlösliche Karbonate bildet.

5. Verfahren nach einem der Ansprüche 1 bis 4, **dadurch gekennzeichnet, dass** für den Spaltungsprozess notwendiges Wasser dem Spaltungsprozess in Form eines unter den Spaltungsbedingungen Wasser abspaltenden, festen, dritten Stoffes zugegeben wird.

6. Verfahren nach einem der Ansprüche 1 bis 4, **dadurch gekennzeichnet, dass** für den Spaltungsprozess notwendiges Wasser in chemisch gebundener Form in dem zweiten Stoff vorliegt, beispielsweise als Kristallwasser oder als aus einem Hydroxid durch Reaktion mit Kohlendioxid abspaltbares Wasser.

7. Verfahren nach Anspruch 6, **dadurch gekennzeichnet, dass** der erste Stoff Harnstoff ist und dass der zweite Stoff ein Bariumhydroxid ist.

8. Mittel zur Entstickung von Abgasen mittels Ammoniakgas, welches Mittel einen ersten Stoff aufweist, der in Ammoniak und Kohlendioxid spaltbar ist, **gekennzeichnet dadurch, dass** das Mittel einen zweiten, Kohlendioxidbindenden Stoff in einer mindestens stöchiometrischen Menge aufweist.

9. Mittel nach Anspruch 8, **dadurch gekennzeichnet, dass** der erste Stoff Harnstoff, Ammoniumcarbamat, Biuret oder Isocyansäure ist und in dem Mittel zwischen 5% und 60% der Gesamtmasse darstellt.

10. Mittel nach einem der Ansprüche 8 oder 9, **dadurch gekennzeichnet, dass** der erste Stoff Harnstoff ist und dass der zweite Stoff ein Bariumhydroxid ist.

11. Mittel nach einem der Ansprüche 8 bis 10, **gekennzeichnet dadurch, dass** das Mittel als zweiten Stoff einen relativen Massenanteil an Bariumhydroxid, gerechnet als wasserfreies $Ba(OH)_2$, zwischen 40% und 95% enthält, vorzugsweise zwischen 65% und 90%.

**Figur 1:**

**Figur 2:**

**Figur 3:**

**Europäisches Patentamt**

**EUROPÄISCHER RECHERCHENBERICHT**

Nummer der Anmeldung

EP 03 40 5587

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DATABASE WPI<br>Section Ch, Week 199428<br>Derwent Publications Ltd., London, GB;<br>Class E36, AN 1994-230288<br>XP002261931<br>-& JP 06 165913 A (BABCOCK-HITACHI KK),<br>14. Juni 1994 (1994-06-14)<br>* Zusammenfassung *<br>* Seite 6, Absatz 20; Abbildungen *<br>--- | 1-11 | B01D53/62<br>B01D53/56<br>B01D53/86<br>B01D53/94<br>C01C1/02<br>C01C1/08 |
| X | DATABASE WPI<br>Section Ch, Week 199621<br>Derwent Publications Ltd., London, GB;<br>Class E35, AN 1996-203614<br>XP002261932<br>-& JP 08 071372 A (BABCOCK-HITACHI KK),<br>19. März 1996 (1996-03-19)<br>* Zusammenfassung *<br>--- | 1-11 | |
| X | US 6 491 885 B1 (NAITO OSAMU ET AL)<br>10. Dezember 2002 (2002-12-10)<br>* Spalte 4, Zeile 13 - Zeile 46 *<br>* Spalte 5, Zeile 23 - Zeile 51; Anspruch<br>1; Abbildungen *<br>--- | 1-6,8,9 | RECHERCHIERTE SACHGEBIETE (Int.Cl.7)<br><br>B01D<br>C01C |
| A | EP 0 393 964 A (WAKO PURE CHEM IND LTD)<br>24. Oktober 1990 (1990-10-24)<br>* Seite 3, Zeile 14 - Zeile 17; Ansprüche<br>*<br>--- | 1,4,6-11 | |
| A | DATABASE WPI<br>Section Ch, Week 197504<br>Derwent Publications Ltd., London, GB;<br>Class J04, AN 1975-07076W<br>XP002261933<br>& SU 420 926 A (MULYANOV P V ET AL),<br>21. August 1974 (1974-08-21)<br>* Zusammenfassung *<br>----- | 1,4,7-10 | |

Der vorliegende Recherchenbericht wurde für alle Patentansprüche erstellt

| Recherchenort | Abschlußdatum der Recherche | Prüfer |
|---|---|---|
| MÜNCHEN | 18. November 2003 | Eijkenboom, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 03 40 5587

In diesem Anhang sind die Mitglieder der Patentfamilien der im obengenannten europäischen Recherchenbericht angeführten Patentdokumente angegeben.

Die Angaben über die Familienmitglieder entsprechen dem Stand der Datei des Europäischen Patentamts am
Diese Angaben dienen nur zur Unterrichtung und erfolgen ohne Gewähr.

18-11-2003

| Im Recherchenbericht angeführtes Patentdokument | | Datum der Veröffentlichung | Mitglied(er) der Patentfamilie | | Datum der Veröffentlichung |
|---|---|---|---|---|---|
| JP 6165913 | A | 14-06-1994 | JP | 3369229 B2 | 20-01-2003 |
| JP 8071372 | A | 19-03-1996 | KEINE | | |
| US 6491885 | B1 | 10-12-2002 | JP | 11171535 A | 29-06-1999 |
| EP 0393964 | A | 24-10-1990 | AT | 107532 T | 15-07-1994 |
| | | | CA | 2014500 A1 | 17-10-1990 |
| | | | DE | 69010063 D1 | 28-07-1994 |
| | | | DE | 69010063 T2 | 05-01-1995 |
| | | | EP | 0393964 A2 | 24-10-1990 |
| | | | JP | 2959801 B2 | 06-10-1999 |
| | | | JP | 3047533 A | 28-02-1991 |
| | | | US | 5030610 A | 09-07-1991 |
| SU 420926 | A | 25-03-1974 | SU | 420926 A1 | 25-03-1974 |

EPO FORM P0461

Für nähere Einzelheiten zu diesem Anhang : siehe Amtsblatt des Europäischen Patentamts, Nr.12/82